# DEMANDE DE BREVET EUROPEEN

(11) **EP 3 409 091 A1**
(43) Date de publication de la demande: **05.12.2018**
(21) Numéro de dépôt: 18175317.9
(22) Date de dépôt: 31.05.2018
(51) Int. Cl.: A01C 7/08, A01C 7/20, A01C 17/00, A01B 73/04, A01C 15/04

(54) **DISPOSITIF D'ÉPANDAGE DE GRAINES**

(30) Priorité: 02.06.2017 FR 1770576
(71) Demandeur: Alpha Semences, 59553 Cuincy (FR)
(72) Inventeur: CAILLE, Daniel, 59553 Cuincy (FR)
(74) Mandataire: Célanie, Christian

(57) **Abrégé**

L'invention concerne un dispositif d'épandage (1) de graines destiné à être placé à l'arrière d'un engin agricole, comprenant un réservoir de graines (2) fixé à une trémie centrale (3).

La trémie centrale (3) comprend un cadre de fixation (4) prolongé de part et d'autre par deux bras latéraux (5a, 5b) munis à leurs extrémités distales (17a, 17b) de moyens de dispersion (7a, 7b) desdites graines et de deux cônes de dépression (6a, 6b) situés chacun au dessus de chacun des moyens de dispersion (7a, 7b) et des moyens d'amener (8a, 8b) lesdites graines du réservoir (2) à chacun des cônes de dépression (6a, 6b), les bras latéraux (5a, 5b) étant chacun constitués par une barre antérieure (14a, 14b) fixe et une barre postérieure (15a, 15b) télescopique.

Application à l'épandage de graines dans un champ en culture.

## Description

Le secteur technique de la présente invention est celui des machines agricoles. Plus précisément, l'invention concerne un dispositif d'épandage de graines destiné à être placé à l'arrière d'un engin agricole tel un tracteur.

Actuellement, il existe de nombreux dispositifs servant à l'épandage de graines et à l'ensemencement.

De manière traditionnelle, un ensemencement est réalisé à la main et à la volée. Toutefois, cette technique présente l'inconvénient d'une part d'une répartition irrégulière des graines, et d'autre part elle est réservée aux surfaces de terre peu étendues.

Pour pallier ces inconvénients, on peut utiliser des semoirs traditionnels, lesquels sont toutefois réservés au traitement de grandes surfaces de terre. En outre, ces semoirs sont de conception relativement complexe et sont très onéreux.

Généralement, on utilise des semoirs en lignes. Dans les semoirs conventionnels, la circulation des graines s'effectue par gravité jusqu'à 4 mètres de largeur de semis ; au-delà, les constructeurs adoptent un transport pneumatique des graines. Les constructeurs proposent des semoirs en lignes intégrables, conçus pour être combinés avec des outils de travail du sol. Ces semoirs sont utilisés pour traiter des zones de terre étendues et ne permettent pas de traiter des terres agricoles dont les cultures sont encore en cours.

Il existe également des dispositifs d'ensemencement ou d'épandage conçus de telle façon qu'ils permettent de traiter des terres agricoles encore en culture. Cependant, de tels dispositifs sont encore très peu perfectionnés et ne sont pas adaptés à l'épandage sur de grandes surfaces de terre.

Une des applications de ces dispositifs est de pouvoir semer dans le blé. Il faut donc ne pas faire de dégâts lors du passage du dispositif, ce qui implique de passer dans les traces des roues du pulvérisateur.

Le but de la présente invention est de proposer un dispositif d'épandage permettant l'épandage de graines dans des champs encore en culture tout en préservant les cultures en cours et en limitant le nombre de passage dans le champ.

L'invention concerne donc un dispositif d'épandage de graines destiné à être placé à l'arrière d'un engin agricole, comprenant un réservoir de graines fixé à une trémie centrale, caractérisé en ce que la trémie centrale comprend un cadre de fixation prolongé de part et d'autre par deux bras latéraux munis à leurs extrémités distales de moyens de dispersion desdites graines et de deux cônes de dépression situés chacun au dessus de chacun des moyens de dispersion et des moyens d'amener lesdites graines du réservoir à chacun des cônes de dépression.

Avantageusement, les bras latéraux sont chacun constitué par une barre antérieure fixe et une barre postérieure télescopique.

Avantageusement encore, chaque cône de dépression et chaque moyen de dispersion sont fixés sur les extrémités distales des barres postérieures.

Selon une autre caractéristique de l'invention, les moyens de dispersion sont chacun constitué par un corps tubulaire, un disque rotatif et une paroi transversale disposée en bordure du disque rotatif.

Avantageusement, chaque cône de dépression est fixé sur la paroi transversale de chaque moyen de dispersion et est mobile par rapport audit moyen de dispersion.

Avantageusement encore, chaque disque rotatif comprend au moins un moyen de projection de graines.

Avantageusement encore, chaque moyen de projection de graines se présente sous la forme de barres en L fixées sur chaque disque rotatif et orientées perpendiculairement auxdits disques.

Avantageusement encore, chaque disque rotatif est orienté selon une direction horizontale par rapport au sol.

Selon encore une autre caractéristique de l'invention les bras latéraux sont mobiles de façon à définir :
- une position de travail du dispositif d'épandage lorsque les bras latéraux sont orientés selon un axe horizontal par rapport au sol, et
- une position de transport du dispositif d'épandage lorsque les bras latéraux sont orientés selon un axe globalement perpendiculaire par rapport au sol.

Un tout premier avantage de l'invention réside dans le fait qu'elle permet un épandage de graines dans des cultures encore en cours.

Un autre avantage de la présente invention réside dans le fait qu'elle préserve les cultures en cours.

Un autre avantage encore de la présente invention réside dans le fait qu'elle permet de traiter de larges surfaces.

Un autre avantage encore de la présente invention réside dans l'épandage de graines de faible densité.

Un autre avantage encore de la présente invention réside dans le fait qu'elle permet d'adapter la zone d'épandage en fonction des besoins.

Un autre avantage encore de la présente invention réside dans le fait que le dispositif est peu encombrant et donc facilement transportable.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 est une vue du dispositif d'épandage en position de travail selon l'invention,
- la figure 2 est une vue du dispositif d'épandage en position de transport selon l'invention,
- la figure 3 est une vue de l'extrémité latérale de la trémie centrale du dispositif d'épandage selon l'invention, et
- la figure 4 est une vue de l'extrémité latérale de la trémie centrale du dispositif d'épandage selon un autre mode de réalisation de l'invention.

L'invention est particulièrement adaptée à l'épandage de graines de faible masse en particulier les graines de radis ou similaires.

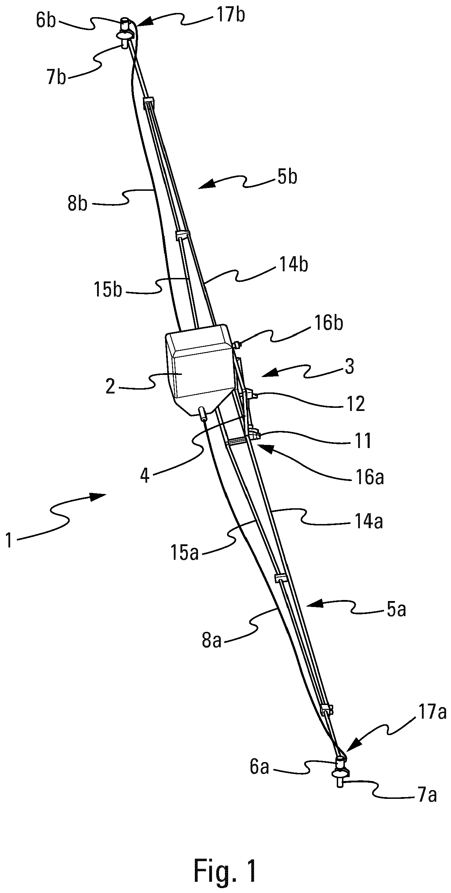

La figure 1 représente le dispositif d'épandage 1 selon l'invention en position de travail.

Dans le cadre de la présente invention, le réservoir de graines 2 utilisé permet de stocker les graines et de les diriger vers les moyens d'amener 8a et 8b. C'est un réservoir ou un doseur de graines bien connu de l'Homme du métier.

Le réservoir de graines 2 est fixé à la trémie centrale 3. Cette trémie centrale 3 comprend un cadre de fixation 4 et deux bras latéraux 5a et 5b. Chaque bras latéral 5a et 5b est composé d'une barre antérieure 14a et 14b fixe est d'une barre postérieure 15a et 15b dont la longueur est ajustable. Les termes antérieurs et postérieurs sont fixés arbitrairement en fonction du sens de fonctionnement du dispositif d'épandage 1.

On distingue également sur la figure 1 les cônes de dépression 6a et 6b ainsi que les moyens de dispersion 7a et 7b fixés aux extrémités distales 17a et 17b des barres postérieures 15a et 15b.

Chaque bras latéral 5a respectivement 5b est fixé au cadre de fixation 4 au niveau de son extrémité proximale 16a respectivement 16b par le biais de moyen de fixation. Au niveau de l'extrémité distale 17a respectivement 17b d'un bras latéral 5a respectivement 5b, est fixé un cône de dépression 6a respectivement 6b et un moyen de dispersion de graines 7a respectivement 7b situé en dessous dudit cône de dépression 6a respectivement 6b. Ainsi, les moyens de dispersion 7a et 7b permettent l'épandage des graines selon un cône de dispersion des graines. Ainsi, lors du fonctionnement du dispositif d'épandage 1, les graines sont projetées par les moyens de dispersions 7a et 7b selon un cône de dispersion et délimitent une fois au sol une zone d'épandage sensiblement de forme rectangulaire.

Selon le mode de réalisation de l'invention représenté sur la figure 1, les extrémités distales 17a et 17b des bras correspondent respectivement aux barres postérieures 15a et 15b. Les cônes de dépression 6a et 6b ainsi que les moyens de dispersion 7a et 7b sont donc fixés sur les extrémités distales 17a et 17b des barres postérieures 15a et 15b.

Sur la figure 1, on distingue également des moyens d'amener 8a et 8b les graines à partir du réservoir 2 de graines aux cônes de dépression 6a et 6b. Comme moyen d'amener 8a et 8b, on peut notamment prévoir des gaines de transport étanches le long des bras latéraux 5a et 5b orientés selon un axe horizontal par rapport au sol.

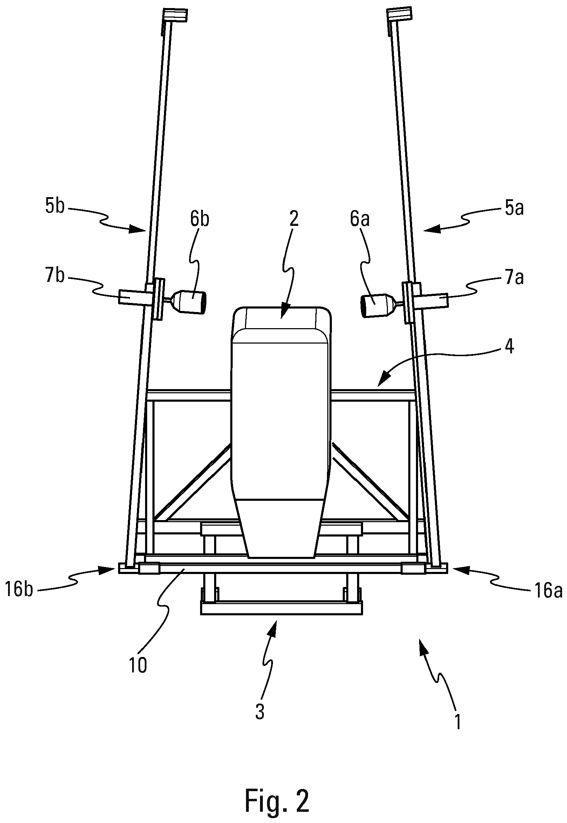

Sur le mode de réalisation de l'invention représenté sur la figure 2, le dispositif d'épandage 1 est en position de transport. On distingue le réservoir de graines 2, la trémie centrale 3, un cadre de fixation 4, et des bras latéraux 5a et 5b. Le cadre de fixation 4 est constitué de deux parties, une partie horizontale 10 et une partie sensiblement verticale 13 constituée de deux barres verticales et deux barres obliques. C'est la partie verticale 13 qui permet de fixer le dispositif d'épandage 1 à l'engin agricole par l'intermédiaire de points de fixation 11, 12 (figure 1) et sur laquelle est également fixé le réservoir de graines 2. Le cadre de fixation 4 reçoit les bras latéraux 5a et 5b par l'intermédiaire de la partie horizontale 10.

A cet effet, les bras latéraux 5a et 5b sont orientés selon un axe globalement perpendiculaire au sol et les barres postérieures 15a et 15b sont repliées. On notera que le passage d'une position de travail à une position de transport, et inversement, peut se faire de manière manuelle ou automatique.

Selon le détail de réalisation représenté sur la figure 2, la trémie centrale 3 comprend le cadre de fixation 4 sur lequel est fixé le réservoir de graines 2. Cette trémie permet de monter le dispositif d'épandage 1 à l'arrière d'une machine agricole tel un tracteur ou un quad. Le dispositif d'épandage 1 est ainsi fixé à l'arrière d'un engin agricole par l'intermédiaire de points de fixation 11, 12 (figure 1) situés sur le cadre de fixation 4.

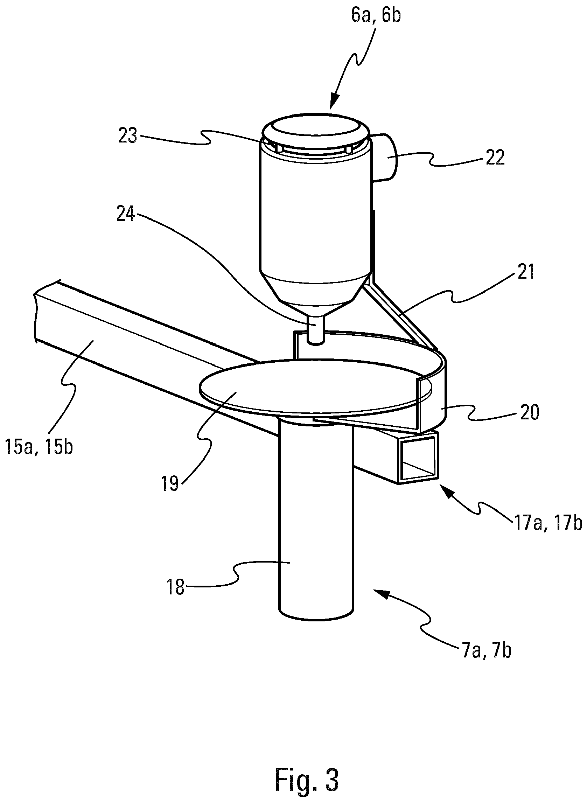

La figure 3 représente une des deux extrémités distales 17a ou 17b du dispositif d'épandage 2 selon un mode de réalisation de l'invention. On distingue ainsi le cône de dépression 6a ou 6b fixé au dessus d'un moyen de dispersion 7a ou 7b des graines.

Selon le mode de réalisation de l'invention représenté sur la figure 3, les moyens de dispersions 7a et 7b sont fixés sur les extrémités distales 17a et 17b des barres postérieures 15a et 15b et sont constitués par un corps tubulaire 18 sur lequel est monté un disque rotatif 19. Chaque disque rotatif 19 est entraîné en rotation par un moteur situé dans le corps tubulaire 18 et alimenté en énergie par un conduit d'apport en énergie relié à une batterie situé sur le dispositif d'épandage 1 ou sur l'engin agricole.

Le moyen de dispersion comporte une paroi transversale 20 sur laquelle est fixé le cône de dépression 6a ou 6b par l'intermédiaire d'une barre de liaison 21. La fixation du cône de dépression 6a ou 7b à la paroi transversale 20 est telle que le cône de dépression 6a ou 6b est mobile par rapport au moyen de dispersion 7a ou 7b. Le cône de dépression 6a ou 6b est notamment constitué d'une entrée 22 de graines reliée au moyen d'amener 8a ou 7b les graines (représenté sur la figure 2), une sortie d'air 23 et une sortie de graines 24 de sorte que les graines tombent par gravité sur le moyen de dispersion 7a ou 7b.

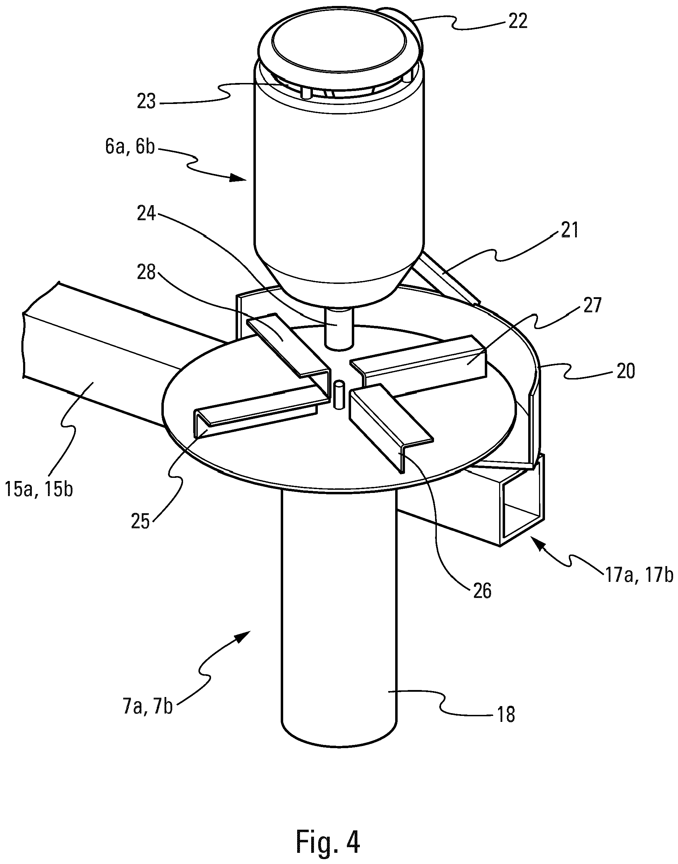

La figure 4 représente une des deux extrémités distales 17a ou 17b du dispositif d'épandage 1 selon un autre mode de réalisation de l'invention. Selon ce mode de réalisation particulier de l'invention, chaque disque rotatif 19 comprend des moyens de projections 25, 26, 27 et 28 de façon à faciliter l'épandage des graines de manière uniforme et régulière sur le sol.

Le dispositif d'épandage 1 selon l'invention permet donc l'épandage de graines sur une terre agricole encore en culture par exemple.

Dans le cadre de la présente invention, on entend par graines les graines permettant la culture de tout type de végétaux. Le terme graine englobe également les engrais ou tout autre produit utile à la culture agricole.

Ainsi, lors de l'utilisation du dispositif d'épandage 1 selon l'invention, ce dernier est monté à l'arrière d'un engin agricole tel un tracteur ou un quad par exemple. Les graines situées dans le réservoir de graines 2 sont dosées et distribuées aux cônes de dépressions 6a et 6b par l'intermédiaire des moyens d'amener 8a et 8b selon des techniques bien connues de l'Homme du métier. Selon une technique bien connue de l'Homme du métier, les graines sont amenées dans des gaines étanches et pressurisées. Ainsi, la graine entre dans les cônes de dépressions 6a et 6b par l'entrée de graines 22 avec une certaine vitesse et les cônes de dépression 6a et 6b permettent de réduire cette vitesse de façon à ce que les graines tombent sur les moyens de dispersion 7a et 7b par simple gravité.

Selon le mode de réalisation de l'invention dans lequel les moyens de dispersion 7a et 7b sont en partie constitués par un disque rotatif 19, les graines sont projetées suivant un cône de dispersion grâce à la rotation du disque rotatif 19. Ce cône de dispersion est ainsi fonction de la vitesse de rotation du disque rotatif 19 mais également du point de chute de la graine par rapport au centre du disque rotatif et donc de la position du cône dépression 6a ou 6b par rapport au disque rotatif 19. Ainsi, pour une vitesse de rotation donnée, plus la distance entre le point du chute de la graine, et donc de la position de la sortie de graine 24 du cône de dépression 6a ou 6b, et le centre du disque rotatif 19 est grande, plus le rayon du cône de dispersion est petit.

On peut définir une zone d'épandage de graines de par la présence de deux moyens de dispersion 7a et 7b dans l'invention. Ainsi, pour une longueur des bras latéraux 5a et 5b égale à 10 m et pour un rayon de cône de dispersion de longueur égale à 10 m, la zone d'épandage est ainsi égale à 40 m.

On peut adapter la zone d'épandage des graines en fonction des besoins en jouant sur la position des cônes de dépression 6a et 6b par rapport au disque rotatif et/ou en jouant sur la longueur des barres postérieures 15a et 15b.

Ainsi, le dispositif d'épandage 1 selon l'invention permet de couvrir une large zone d'épandage.

Une application du dispositif est l'épandage de graines dans des champs agricoles dont les cultures sont encore en cours. Ce qui permet à l'agriculteur d'épandre la prochaine culture en faisant passer son engin agricole dans des chemins déjà tracés et ainsi ne pas endommager les cultures en cours. Cette prochaine culture est tout à fait apte à la production de biogaz.

## Revendications

1. Dispositif d'épandage (1) de graines destiné à être placé à l'arrière d'un engin agricole, comprenant un réservoir de graines (2) fixé à une trémie centrale (3), **caractérisé en ce que** la trémie centrale (3) comprend un cadre de fixation (4) prolongé de part et d'autre par deux bras latéraux (5a, 5b) munis à leurs extrémités distales (17a, 17b) de moyens de dispersion (7a, 7b) desdites graines et de deux cônes de dépression (6a, 6b) situés chacun au dessus de chacun des moyens de dispersion (7a, 7b) et des moyens d'amener (8a, 8b) lesdites graines du réservoir (2) à chacun des cônes de dépression (6a, 6b).

2. Dispositif d'épandage (1) selon la revendication 1, **caractérisé en ce que** les bras latéraux (5a, 5b) sont chacun constitués par une barre antérieure (14a, 14b) fixe et une barre postérieure (15a, 15b) télescopique.

3. Dispositif d'épandage (1) selon la revendication 2, **caractérisé en ce que** les cônes de dépression (6a, 6b) et les moyens de dispersion (7a, 7b) sont fixés sur les extrémités distales (17a, 17b) des barres postérieures (15a, 15b).

4. Dispositif d'épandage (1) selon l'une quelconque des revendications précédentes, **caractérisé en ce que** les moyens de dispersion (7a, 7b) sont chacun constitués par un corps tubulaire (18), un disque rotatif (19) et une paroi transversale (20).

5. Dispositif d'épandage (1) selon la revendication 4, **caractérisé en ce que** les cônes de dépression (6a, 6b) sont fixé sur les parois transversales (20) des moyens de dispersion (7a, 7b) et sont mobiles par rapport auxdits moyens de dispersion (7a, 7b).

6. Dispositif d'épandage (1) selon la revendication 4 ou 5, **caractérisé en ce que** les disques rotatifs (19) comprennent au moins un moyen de projection (25, 26, 27, 28) de graines.

7. Dispositif d'épandage (1) selon la revendication 6, **caractérisé en ce que** les moyens de projections (25, 26, 27, 28) de graines se présentent sous la forme de barres fixées sur les disques rotatifs (19) et orientées perpendiculairement auxdits disques (19).

8. Dispositif d'épandage (1) selon l'une quelconque des revendications 4 à 7, **caractérisé en ce que** les disques rotatifs (19) sont orientés selon une direction horizontale par rapport au sol.

9. Dispositif d'épandage (1) selon l'une quelconque des revendications précédentes, **caractérisé en ce que** les bras latéraux (5a, 5b) sont mobiles de façon à définir :
- une position de travail du dispositif d'épandage (1) lorsque les bras latéraux (5a, 5b) sont orientés selon un axe horizontal par rapport au sol, et
- une position de transport du dispositif d'épandage (1) lorsque les bras latéraux (5a, 5b) sont orientés selon un axe globalement perpendiculaire par rapport au sol.
